# EUROPÄISCHE PATENTSCHRIFT

(11) **EP 2 159 173 B1**
(45) Veröffentlichungstag und Bekanntmachung des Hinweises auf die Patenterteilung: **26.10.2011**
(21) Anmeldenummer: 09161694.6
(22) Anmeldetag: 02.06.2009
(51) Int. Cl.: B65G 47/68, B65B 21/20

(54) **Transportvorrichtung und Verfahren zum geordneten Transport von Artikeln**
Transport device and method for controlled transport of items
Dispositif de transport et procédé de transport ordonné d'articles

(30) Priorität: 27.08.2008 DE 102008039970
(43) Veröffentlichungstag der Anmeldung: 03.03.2010
(73) Patentinhaber: Krones AG, 93073 Neutraubling (DE)
(72) Erfinder: Bauer, Martin, 61130, Nidderau (DE); Rausch, Karl, 83022, Rosenheim (DE); Mayer, Josef, 83209, Prien am Chiemsee (DE); Spindler, Herbert, 83083, Riedering (DE); Unterseher, Josef, 83101, Rohrdorf (DE)
(74) Vertreter: Reichert, Werner Franz

(56) Entgegenhaltungen:
- DE-A1- 3 336 988
- GB-A- 922 791

## Beschreibung

Die vorliegende Erfindung betrifft eine Transportvorrichtung zum geordneten Transport von Artikeln in Einzelgassen. Insbesondere betrifft die vorliegende Erfindung eine Transportvorrichtung zum Transport von Artikeln in Einzelgassen. Jeder Einzelgasse ist ein Trennelement zugeordnet und benachbarte Einzelgassen sind durch jeweils eines der Trennelemente getrennt. Es ist mindestens ein Verstellmittel vorgesehen, mit dem die jeweiligen Breiten der Einzelgassen quer zu einer Transportrichtung der Transportvorrichtung einstellbar sind.

Die vorliegende Erfindung betrifft auch ein Verfahren zum geordneten Transport von Artikeln. Insbesondere betrifft die vorliegende Erfindung ein Verfahren zum geordneten Transport von Artikeln in einer Vielzahl von Einzelgassen, wobei die Größen und Formen der auf die Transportvorrichtung einlaufenden Artikel ermittelt werden.

Das U.S. Patent 3,194,382 A offenbart eine Maschine zum Einordnen und Transportieren einer Vielzahl von Artikel, wobei die Artikel in Reihen auf einer Vielzahl von Transportbändern transportiert werden. Je eine Reihe von Artikeln wird auf je einem Einzel-Transportband transportiert, deren Breite geringer als der Durchmesser der jeweiligen Artikel ist. Die Breiten der Einzel-Transportbänder sind gleich. Die Artikel werden in Gruppen eingeteilt, wobei eine einzelne Gruppe sich über alle Einzel-Transportbänder beziehungsweise Gassen erstreckt und in jeder Gasse dieselbe Anzahl von Artikeln abgeteilt ist. Die Gruppen von Artikeln sind in Transportrichtung beabstandet.

Die internationale Patentanmeldung WO 2007/102917 A2 offenbart eine Verpackungseinrichtung mit einem Transportförderer und einer Vielzahl von Gassen. Auf einem ersten Abschnitt des Transportförderers verlaufen die Gassen entlang einer ersten Achse. Die Gassen des ersten Abschnitts münden in Gassen eines sich an den ersten Abschnitt anschließenden zweiten Abschnitts. Im zweiten Abschnitt verlaufen die Gassen entlang einer zweiten Achse. Durch Verstellung des Winkels zwischen der ersten und der zweiten Achse werden die Breiten jeder Gasse im zweiten Abschnitt beliebig, jedoch einheitlich gleich über alle Gassen, eingestellt.

Die deutsche Patentanmeldung DE 33 36 988 A1 offenbart einen Flaschenförderer zum Transportieren einer Vielzahl von Artikeln, insbesondere von Flaschen. Die Artikel werden in Gassen auf einer Vielzahl von Transportbändern transportiert. Je eine Gasse ist auf je einem Einzel-Transportband ausgebildet, das über eine Führungsschiene geleitet wird.

Für unterschiedlich große Artikel werden die Breiten der Gassen dadurch eingestellt, dass der Abstand zwischen den Führungsschienen quer zur Transportrichtung verstellt wird.

Die Breiten der Gassen sind über alle Gassen gleich. Die deutsche Patentanmeldung DE 33 36 988 offentart auch eine Transportvorrichtung sowie ein verfahren zum geordneten Transport von Artikeln gemäss dem Oberbegriff der Ansprüche 1 and 7.

Das U.S. Patent 2,951,574 A offenbart eine Flaschenabfülleinrichtung, bei der eine Vielzahl von Flaschen auf einem Mattenförderer transportiert wird. Auf dem Mattenförderer sind Gassen angeordnet, in denen die Flaschen in Reihen hintereinander geordnet geführt werden. Für unterschiedlich große Artikel werden die Breiten der Gassen dadurch auf eine eingestellt, dass oberhalb des Mattenförderers eine Scheranordnung verstellt wird. Die Breiten der Gassen sind über alle Gassen gleich.

Aufgabe der Erfindung ist, eine Transportvorrichtung für Artikel unterschiedlicher Größe und Form zu schaffen, wobei die Transportvorrichtung einfach und schnell an die in Gassen transportierten Artikel anpassbar ist und zu einem Zeitpunkt Artikel unterschiedlicher Größe und Form transportierbar sind.

Die obige Aufgabe wird durch eine Transportvorrichtung gelöst, die die Merkmale des Patentanspruchs 1 umfasst.

Eine weitere Aufgabe der Erfindung ist, ein Verfahren zum geordneten Transport von Artikeln unterschiedlicher Größe und Form in einer Vielzahl von Einzelgassen zu schaffen, wobei die Transportvorrichtung einfach und schnell an die in Gassen transportierten Artikel angepasst wird und zu einem Zeitpunkt Artikel unterschiedlicher Größe und Form transportiert werden.

Die obige Aufgabe wird durch ein Verfahren gelöst, das die Merkmale des Patentanspruchs 7 umfasst.

Die vorliegende Erfindung offenbart eine Transportvorrichtung zum geordneten Transport von Artikeln auf einem Transportmittel. Die Artikel können beispielsweise Getränkeflaschen oder Getränkedosen sein, oder auch jegliche anderen Artikel, die mit der Transportvorrichtung geordnet geführt werden. Die Transportvorrichtung hat für die einzelnen Artikel eine Vielzahl von Einzelgassen jeweils mit einer Breite BE ausgebildet. Die Artikel sind auf den Einzelgassen jeweils nacheinander geordnet geführt. Jeder Einzelgasse ist jeweils ein Trennelement zugeordnet, damit die Artikel in den Gassen stabil führbar sind. Benachbarte Einzelgassen sind entsprechend durch jeweils eines der Trennelemente getrennt.

Die Transportvorrichtung sieht mindestens ein Verstellmittel vor, mit dem die jeweiligen Breiten der Einzelgassen quer zu einer Transportrichtung der Transportvorrichtung einstellbar sind. Darüber hinaus können mindestens jeweils zwei benachbarte Einzelgassen jeweils eine Gassengruppe mit bilden. Diese derart gebildeten Gassengruppen sind zueinander verschiebbar. Dazu ist mindestens ein weiteres Verstellmittel vorgesehen, mit dem die jeweiligen Breiten der Gassengruppen quer zur Transportrichtung einstellbar sind.

Durch die weiteren Verstellmittel können die Breiten der Einzelgassen weiterhin gleich über alle Gassen gemäß dem Stand der Technik eingestellt werden. Alternativ und darüber hinaus können die Breiten der Einzelgassen jedoch mittels der weiteren Verstellmittel gruppenweise unterschiedlich eingestellt werden. Abhängig von der Anzahl der eingesetzten Verstellmittel sind entsprechend viele Gruppenbildungen von unterschiedlich breiten und/oder gleich breiten Einzelgassen möglich.

Auf diese Weise können beispielsweise in regelmäßigen Abständen zwei Einzelgassen zusammengeschoben werden, auf denen keine Artikel transportiert werden. Versetzt dazu ergeben sich dann breite Einzelgassen, auf denen passend breite Artikel transportiert werden können.

In einer anderen Anwendung der Erfindung werden auf allen Einzelgassen Artikel transportiert, die Breiten der Einzelgassen sind jedoch unterschiedlich, so dass auf den schmale(re)n Einzelgassen schmale(re) Artikel und auf den breite(re)n Einzelgassen breite(re) Artikel transportiert werden.

Das Transportmittel der Transportvorrichtung kann als ein Mattenförderer aus einem Stück über alle Einzelgassen ausgebildet sein. Vorzugsweise sollte solch ein Mattenförderer formstabil bezüglich Verschiebungen quer zur Transportrichtung der Transportvorrichtung sein. In einer bevorzugten Ausführungsform der Erfindung umfasst das Transportmittel eine Vielzahl von Einzel-Transportbändem, wobei je ein Einzel-Transportband einer Gasse zugeordnet ist. In einer weiteren Ausführungsform der Erfindung umfasst das Transportmittel eine Vielzahl von Führungsschienen, auf denen die Artikel transportiert werden. Dabei ist jeder Führungsschiene eine Gasse zugeordnet. Es ist für jeden Fachmann jedoch vorstellbar, dass weitere Transportmittel aus dem Stand der Technik verwendet werden können, ohne dabei den Schutzbereich der vorliegenden Erfindung zu verlassen. Bei der Auswahl der geeigneten Transportmittel sind die dafür sich ergebenden Ober- und Untergrenzen für die Breiten der Einzelgassen zu beachten. Beispielsweise kann ein Mattenförderer aus einem Stück durch zu große Breitenunterschiede bei den Einzelgassen Wellen schlagen. Führungsschienen oder Einzel-Transportbänder können die Artikel bei großer Breite der Einzelgassen gegebenenfalls nicht mehr kippsicher transportieren und/oder die Geschwindigkeit der Führungsschienen oder der Einzel-Transportbänder wird unerwünscht reduziert.

In einer bevorzugten Ausführungsform der Erfindung sind die Breiten der Einzelgassen und/oder die Breiten der Gassengruppen mit den Verstellmitteln stufenlos einstellbar. Dazu können beispielsweise die Verstellmittel Wellen mit jeweils einer Vielzahl von Spindeln umfassen. Die Spindeln sind dabei auf den Wellen derart angeordnet, dass sie zwischen den jeweiligen Gassengruppen angeordnet sind. Insbesondere können die Spindeln jeweils aus zwei gegenläufigen Abschnitten bestehen. Durch gegenläufiges Verdrehen aller Spindeln einer jeweiligen Welle verringern oder verlängern sich die Breiten der jeweiligen Gassengruppen. Dabei sind die Breiten der Gassengruppen der jeweils zugehörigen Welle einheitlich gleich. Wird dieses Prinzip auf alle Gassengruppen mit den jeweils zugehörigen Wellen angewandt, ergeben sich daraus letztendlich gruppenweise unterschiedliche Breiten von Einzelgassen.

In einer weiteren Ausführungsform der Erfindung bilden mindestens zwei Einzelgassen mindestens einer Gassengruppe eine Vereinigungsgasse, deren Breite mindestens die summierten Breiten der mindestens zwei Einzelgassen der mindestens einen Gassengruppe beträgt. Die zwischen den Einzelgassen der jeweils derart gebildeten Vereinigungsgassen befindlichen Trennelemente werden entfernt, so dass auf den derart gebildeten Vereinigungsgassen vergleichsweise breite Artikel transportiert werden können. Falls das Transportmittel Führungsschienen oder Einzel-Transportbänder umfasst, so wird ein jeweiliger breiter Artikel in der entsprechenden Vereinigungsgasse auf mindestens zwei Führungsschienen oder Einzel-Transportbändem transportiert.

In einer einfachen Ausführungsform der Erfindung bilden jeweils zwei Einzelgassen eine Gassengruppe. Eine erste Welle und eine zweite Welle sind vorgesehen. Die Verstellmittel auf der ersten Welle sind nach allen Einzelgassen mit einer geradzahligen Ordnungszahl angeordnet und die Verstellmittel auf der zweiten Welle sind nach allen Einzelgassen mit einer ungeradzahligen Ordnungszahl angeordnet. Es ist offensichtlich, dass umgekehrt und ohne Beschränkung der Erfindung auch die Verstellmittel auf der ersten Welle nach allen Einzelgassen mit einer ungeradzahligen Ordnungszahl und die Verstellmittel auf der zweiten Welle nach allen Einzelgassen mit einer geradzahligen Ordnungszahl angeordnet sein können.

Die vorliegende Erfindung offenbart auch ein Verfahren zum geordneten Transport von Artikeln. In einem ersten Schritt werden die Größen und Formen von auf einer Transportvorrichtung einlaufenden Artikeln ermittelt. Da die Artikel unterschiedlich sein können, können auch entsprechend die jeweiligen Größen und Formen der Artikel unterschiedlich sein. Die einzelnen Artikel werden ebenfalls in einer Vielzahl von Einzelgassen transportiert. In den weiteren Schritten werden die Einzelgassen in Gassengruppen aufgrund der ermittelten Formen und Größen der einlaufenden Artikel eingeteilt. Dabei können unterschiedliche Arten von Gassengruppen gebildet werden und ganze Gassengruppen verschoben werden. In einem letzten Schritt des Verfahrens werden die Breiten der Einzelgassen innerhalb jeder Gassengruppe aufgrund der ermittelten Formen und Größen der einlaufenden Artikel verstellt.

In einer einfachen Ausführungsform des Verfahrens werden nach dem Ermitteln der Größen und Formen der Artikel die Einzelgassen in Gassengruppen von jeweils zwei Einzelgassen durch Einstellen der Verstellmittel der ersten Welle eingeteilt. Weitere Gruppierungen finden nicht statt. Die Verstellmittel auf der ersten Welle sind nach allen Einzelgassen mit einer geradzahligen Ordnungszahl angeordnet. Dann werden die Breiten der jeweils zwei Einzelgassen innerhalb jeder Gassengruppe durch die Verstellmittel der zweiten Welle eingestellt. Dazu sind die Verstellmittel auf der zweiten Welle nach allen Einzelgassen mit einer ungeradzahligen Ordnungszahl angeordnet. Wie oben bereits beschrieben, können die Verstellmittel auf den jeweiligen Wellen auch nach den umgekehrten Ordnungszahlen angeordnet sein.

Im Folgenden sollen Ausführungsbeispiele die Erfindung und ihre Vorteile anhand der beigefügten Figuren näher erläutern.
Figur 1 zeigt eine schematische Vorderansicht eines Ausschnitts einer Transportvorrichtung mit Einzel-Transportbändem nach dem Stand der Technik.
Figur 2 zeigt eine schematische Vorderansicht eines Ausschnitts einer Transportvorrichtung mit einem einstückigen Mattenförderer nach dem Stand der Technik, wobei die Einzelgassen durch Trennelemente gebildet sind.
Figur 3 zeigt eine schematische Draufsicht eines Ausschnitts einer Transportvorrichtung mit Einzelgassen gleicher Breite nach dem Stand der Technik.
Figur 4 zeigt eine weitere schematische Vorderansicht eines Ausschnitts einer erfindungsgemäßen Transportvorrichtung mit Einzelgassen gleicher Breite.
Figur 5 zeigt eine schematische Vorderansicht des Ausschnitts der Transportvorrichtung nach Figur 4 mit gruppierten Einzelgassen unterschiedlicher Breite gemäß der vorliegenden Erfindung, wobei die schmalen Einzelgassen nicht genutzt werden.
Figur 6 zeigt eine schematische Vorderansicht des Ausschnitts der Transportvorrichtung nach Figur 4 mit gruppierten Einzelgassen unterschiedlicher Breite gemäß der vorliegenden Erfindung, wobei die schmalen Einzelgassen für schmale Artikel genutzt werden.
Figur 7 zeigt eine schematische Vorderansicht des Ausschnitts der Transportvorrichtung nach Figur 4 mit Vereinigungsgassen gemäß der vorliegenden Erfindung.
Figur 8 zeigt eine Perspektivansicht eines Ausschnitts einer Ausführungsform der erfindungsgemäßen Transportvorrichtung mit zwei Wellen und Spindeln in einer Ausgangsposition, wobei zunächst die erste Welle und dann die zweite Welle eingestellt werden sollen.
Figur 9 zeigt die Perspektivansicht des Ausschnitts der Ausführungsform der erfindungsgemäßen Transportvorrichtung in der Ausgangsposition nach Figur 8, wobei zunächst die zweite Welle eingestellt wird.
Figur 10 zeigt eine Perspektivansicht des Ausschnitts der Ausführungsform der erfindungsgemäßen Transportvorrichtung in der Ausgangsposition nach Figur 8, wobei Trennelemente angebracht sind.
Figur 11 zeigt eine Vorderansicht des Ausschnitts der Ausführungsform nach Figur 10.
Figur 12 zeigt eine Perspektivansicht des Ausschnitts der Ausführungsform der erfindungsgemäßen Transportvorrichtung nach Figur 10 in einer Verstellung mit Vereinigungsgassen.
Figur 13 zeigt eine Vorderansicht des Ausschnitts der Ausführungsform mit der Einstellung nach Figur 12.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung da.

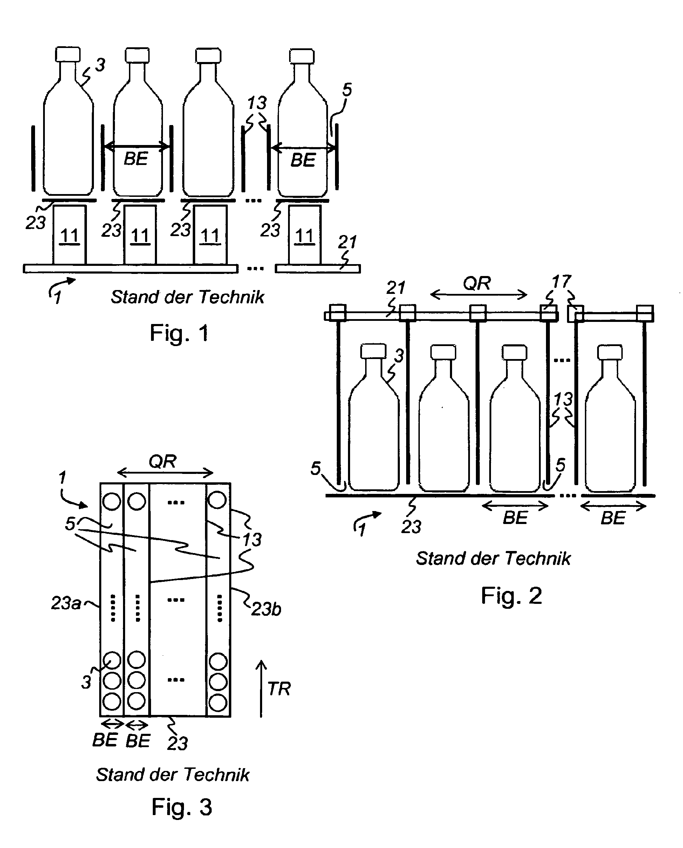

**Figur 1** zeigt eine schematische Vorderansicht eines Ausschnitts einer Transportvorrichtung 1 mit einem als Vielzahl von Einzel-Transportbändem ausgestaltetes Transportmittel 23 nach dem Stand der Technik. Die Einzel-Transportbänder liegen auf Gassenträgern 11 auf und bilden zusammen mit Trennelementen 13 Einzelgassen 5, in denen Artikel 3 geführt werden. Die Einzelgassen 5 weisen alle dieselbe Breite BE auf. Die Gassenträger 11 sind mit einem Gestell 21 verbunden.

**Figur 2** zeigt eine schematische Vorderansicht eines Ausschnitts einer Transportvorrichtung 1 nach dem Stand der Technik mit einem als einstückiger Mattenförderer ausgestalteten Transportmittel 23. Der Mattenförderer befindet sich unterhab aller Einzelgassen 5. An einem Gestell 21 oberhalb der Artikel 3 in den Einzelgassen 5 sind die Trennelemente 13 angeordnet. Die Einzelgassen 5 weisen ebenfalls alle dieselbe Breite BE auf. Mit Verstellelementen 17 können die Trennelemente 13 in einer Richtung QR quer zur Transportrichtung TR (nicht dargestellt) verschoben werden und so die Breiten BE der Einzelgassen 5 eingestellt werden.

**Figur 3** zeigt eine schematische Draufsicht eines Ausschnitts einer Transportvorrichtung 1 mit Einzelgassen 5 gleicher Breite BE auf einem Transportmittel 23 nach dem Stand der Technik. Die Artikel 3 werden in Transportrichtung TR durch die Einzelgassen 5 geführt.

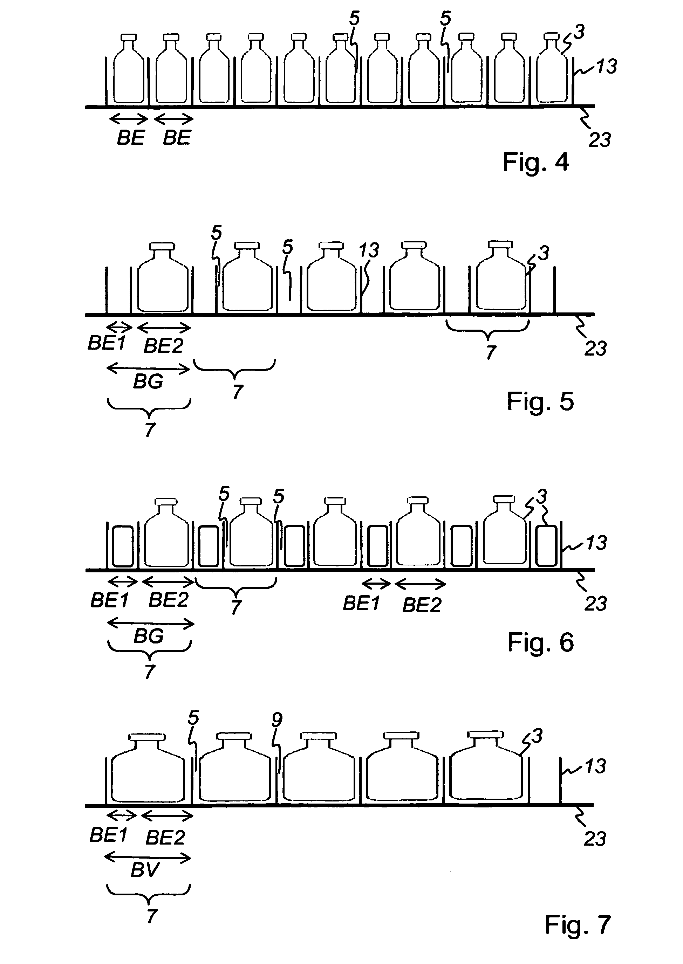

In den **Figuren 4 bis 7** sollen einige Anwendungsmöglichkeiten für den Transport von Artikeln unterschiedlicher Größe und Form sowie Möglichkeiten zur Bildung von Gassengruppen 7 aus Einzelgassen 5 dargestellt werden. Dabei wird stets dieselbe Ausführungsform der erfindungsgemäßen Transportvorrichtung 1 verwendet. Dafür sind die technischen Details zur Ausgestaltung der einzelnen Elemente der Transportvorrichtung 1 vernachlässigbar. In den Figuren 4 bis 7 werden nur diejenigen Elemente detailliert beschrieben, die nicht bereits in den vorangehenden Figuren beschrieben wurden.

**Figur 4** zeigt eine weitere schematische Vorderansicht eines Ausschnitts einer Transportvorrichtung 1 mit Einzelgassen 5 gleicher Breite BE nach dem Stand der Technik.

**Figur 5** zeigt eine schematische Vorderansicht des Ausschnitts der Transportvorrichtung 1 nach Figur 4 mit gruppierten Einzelgassen 5 unterschiedlicher Breite BE1 und BE2 gemäß der vorliegenden Erfindung. Die schmalen Einzelgassen 5 mit der Breite BE1 werden nicht für den Transport genutzt. Auf den breiten Einzelgassen 5 mit der Breite BE2 werden Artikel 3 transportiert. Es besteht gemäß der oben beschriebenen einfachen Ausführungsform nur eine Art von Gassengruppen 7, welche jeweils aus genau zwei Einzelgassen 5 bestehen, jeweils mit der Breite BE 1 beziehungsweise BE2. Die Breiten BG der Gassengruppen 7 betragen wenigstens die Summe aus BE1 und BE2.

Auf diese Weise können durch Verengen jeder zweiten Einzelgasse 5 zu jeweils einer engen Einzelgassen 5 mit der Breite BE1 breite Artikel 3 mit der Transportvorrichtung 1 in den übrigen breiteren Einzelgassen 5 transportiert werden. Dadurch dass die Trennelemente 13 nicht, wie beim Stand der Technik, bei der Verbreiterung von Einzelgassen 5 alle einheitlich entlang der Richtung QR auseinander versetzt werden, wird als weiterer Vorteil der Erfindung gewährleistet, dass die Summe aller Breiten BE der Einzelgassen 5 bei der erfindungsgemäßen Transportvorrichtung 1 geringer oder gleich als die Breite des Transportmittels 23 ist. Somit können bei der vorliegenden Erfindung keine Trennelemente 13 und/oder Einzelgassen 5 über die beiden Ränder 23a, 23b entlang der Transportrichtung TR des Transportmittels 23 herausragen und damit für den Transport von Artikeln 3 unbrauchbar sein (siehe Figur 3).

**Figur 6** zeigt eine schematische Vorderansicht des Ausschnitts der Transportvorrichtung 1 nach Figur 4 mit gruppierten Einzelgassen 5 unterschiedlicher Breite BE1 und BE2 wie bei Figur 5, mit dem Unterschied, dass hier auch die schmalen Einzelgassen 5 für den Transport schmaler Artikel 3 genutzt werden. Auf diese Weise könnten beispielsweise in einer sich anschließenden Verpackungseinrichtung (nicht dargestellt) jeweils ein schmaler und ein breiter Artikel 3 zu einer Verpackungseinheit (ebenfalls nicht dargestellt) verpackt werden.

**Figur 7** zeigt eine schematische Vorderansicht des Ausschnitts der Transportvorrichtung 1 nach Figur 4 mit Vereinigungsgassen 9 gemäß der vorliegenden Erfindung. Durch Entnahme der inneren Trennelemente 13 je Gruppengasse 7 von zwei ehemaligen Einzelgassen 5 entstehen die Vereinigungsgassen 9, die breiter als die einzelnen Einzelgassen 5 sind und so dass noch im Vergleich zu Figur 6 noch breitere Artikel 3 in den Vereinigungsgassen 9 transportiert werden können.

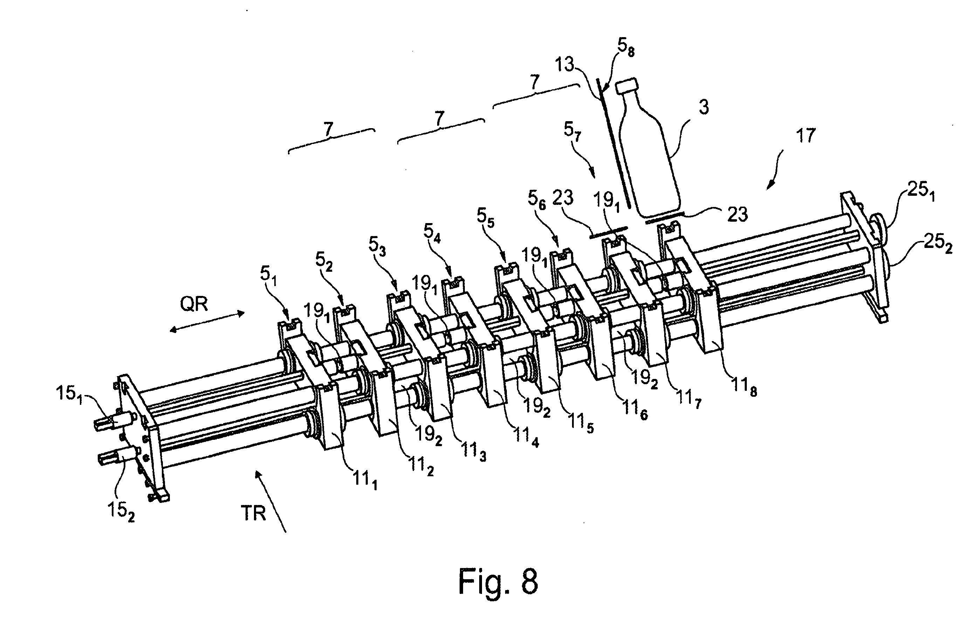

**Figur 8** zeigt eine Perspektivansicht eines Ausschnitts einer Ausführungsform der erfindungsgemäßen Transportvorrichtung 1 mit zwei Wellen 15₁ und 15₂, an denen jeweils vier Spindeln 19₁ beziehungsweise drei Spindeln 19₂ abwechselnd zwischen Gassenträgern 11₁ bis 11₈ angeordnet sind. Dem jeweiligen Gassenträger 11ᵢ ist eine jeweilige Einzelgasse 5ᵢ zugeordnet, i=1,...,8, die jedoch nicht dargestellt sind, sondern deren Positionen nur durch Pfeile angedeutet sind. Zur besseren Orientierung des Betrachters sind schematisch ein Artikel 3 mit einem Trennelement 13 und zwei eines als Einzel-Transportbänder ausgestalteten Transportmittels 23 dargestellt. Die Spindeln 19₁ und 19₂ sind als gegenläufige Spindeln ausgestaltet. Somit kann man die Trennelemente 13 jeweils paarweise mit der Drehung jeweils einer der zwei Wellen 15₁ und 15₂ aufeinander zu- und/oder voneinander wegbewegen.

In der Figur 8 befinden sich die beiden Wellen 15₁ und 15₂ in einer Ausgangsposition vor Einstellung der Breiten BE der Einzelgassen 5 und vor Einstellung der Breiten BG der Gassengruppen 7. Daher sind in Figur 8 die Breiten BE über alle Einzelgassen 5 gleich.

Werden zuerst die Spindeln 19₁ der ersten Welle 15₁ durch Betätigen einer Welleneinstelleinheit 25₁ eingestellt, ergeben sich daraus zunächst drei Gassengruppen 7. Dabei bilden die Einzelgassen 5₂ und 5₃ eine Gassengruppe 7, die Einzelgassen 5₄ und 5₅ die nächste Gassengruppe 7 und die Einzelgassen 5₆ und 5₇ die letzte Gassengruppe 7. Die Einzelgassen 5₁ und 5₈ gehören zu keiner Gassengruppe 7. Anschließend werden die Spindeln 19₂ der zweiten Welle 15₂ durch Betätigen einer Welleneinstelleinheit 25₂ eingestellt. Dadurch werden die Breiten BE der Einzelgassen 5 innerhalb jeder der drei Gassengruppen 7 eingestellt und es ergeben sich die gewünschte Breiten BE der Einzelgassen 5 und/oder gewünschte Breiten BG der Gassengruppen 7.

Bei jeder Welle 15 werden vorzugsweise alle Spindeln der jeweiligen Welle 15 um dieselben Abstände verschoben, so dass die Breiten BG der Gassengruppen 7 und/oder die Breiten BE der Einzelgassen 5 in regelmäßigen Abständen gleich sind.

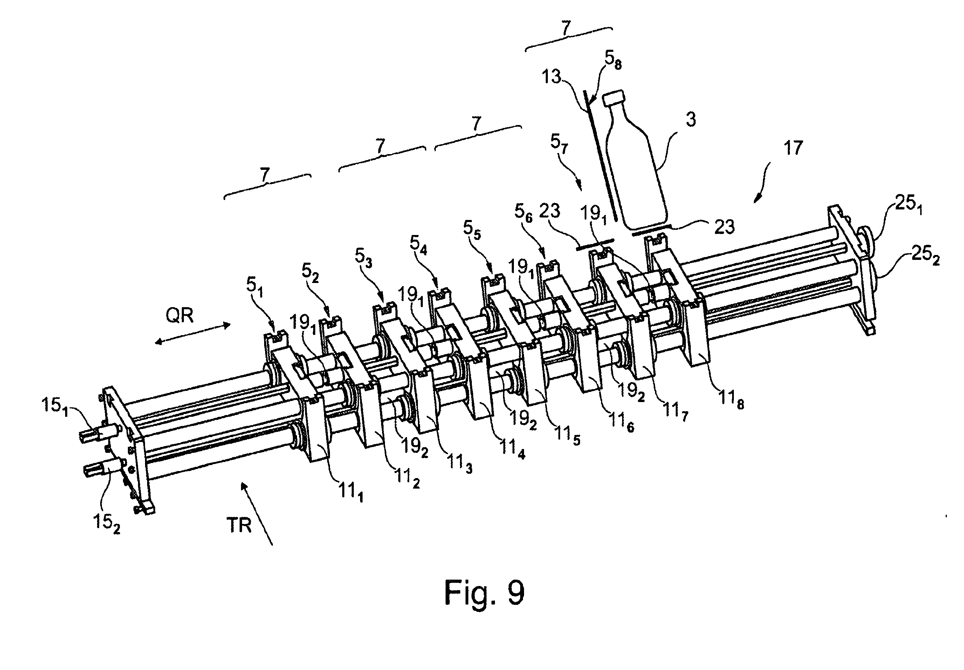

**Figur 9** zeigt die Perspektivansicht des Ausschnitts der Ausführungsform der erfindungsgemäßen Transportvorrichtung 1 in der Ausgangsposition nach Figur 8, wobei nun umgekehrt zunächst die zweite Welle 15₂ eingestellt und danach die erste Welle 15₁ eingestellt werden sollen.

Daraus ergeben sich vier andere Gassengruppen 7. Die Einzelgassen 5₁ und 5₂ bilden eine Gassengruppe 7, die Einzelgassen 5₃ und 5₄ die nächste Gassengruppe 7, die Einzelgassen 5₅ und 5₆ die nächste Gassengruppe 7 und die Einzelgassen 5₇ und 5₈ bilden die letzte Gassengruppe 7. Alle Einzelgassen 5 gehören also nun zu einer Gassengruppe 7.

Anschließend werden die Spindeln 19₁ der ersten Welle 15₁ eingestellt. Dadurch werden die Breiten BE der Einzelgassen 5 innerhalb jeder der vier Gassengruppen 7 eingestellt und es ergeben sich die gewünschte Breiten BE der Einzelgassen 5 und/oder gewünschte Breiten BG der Gassengruppen 7.

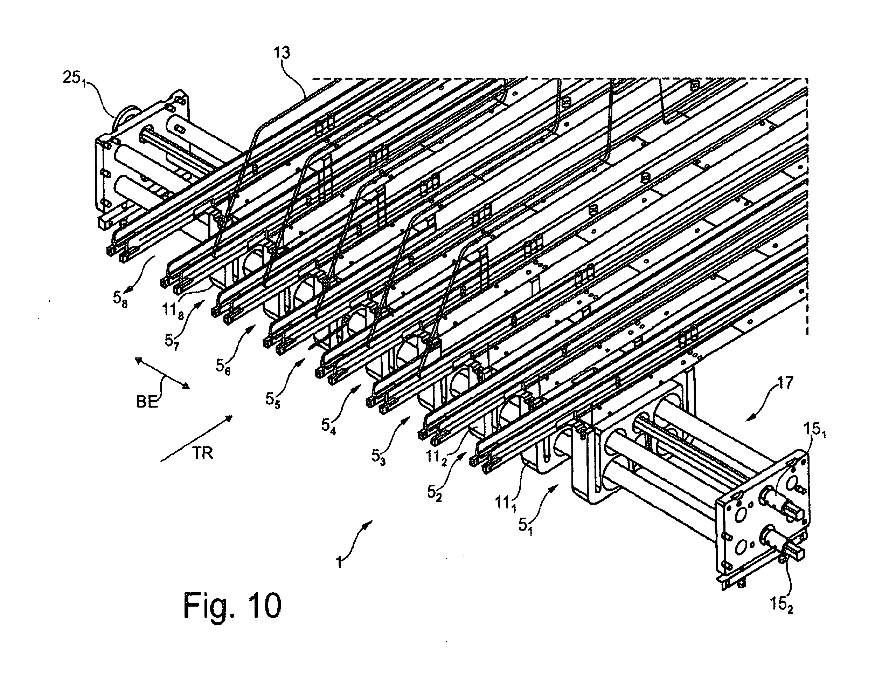

Figur 10 zeigt eine Perspektivansicht des Ausschnitts der Ausführungsform der erfindungsgemäßen Transportvorrichtung 1 in der Ausgangsposition nach Figur 8, wobei nun Trennelemente 13 angebracht sind. Das Transportmittel 23 umfasst acht Gassenträger 11,,...,11₈, die die Artikel 3 (nicht dargestellt in Figur 10) für den Weitertransport tragen.

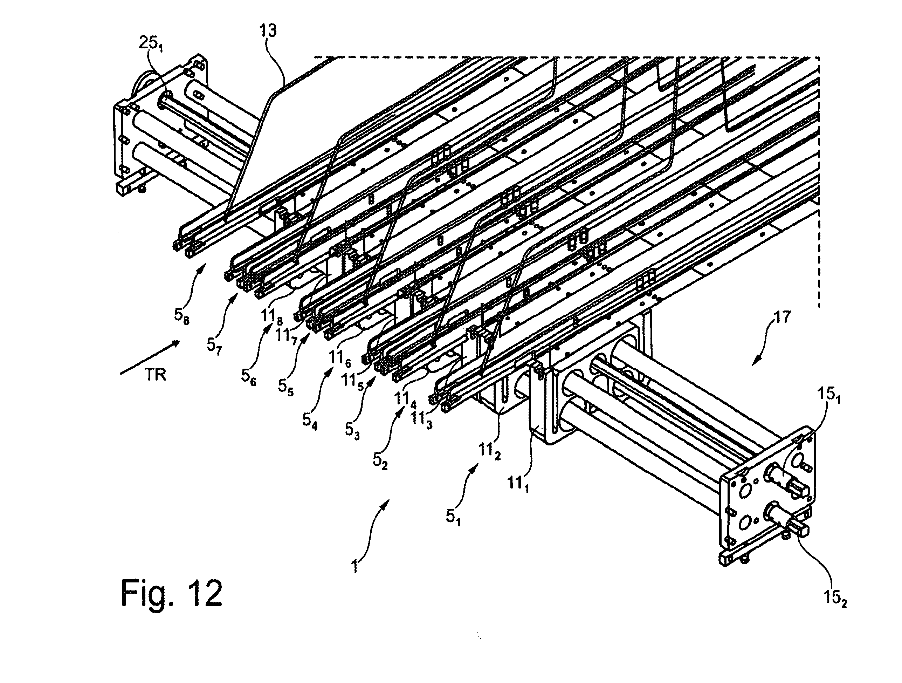

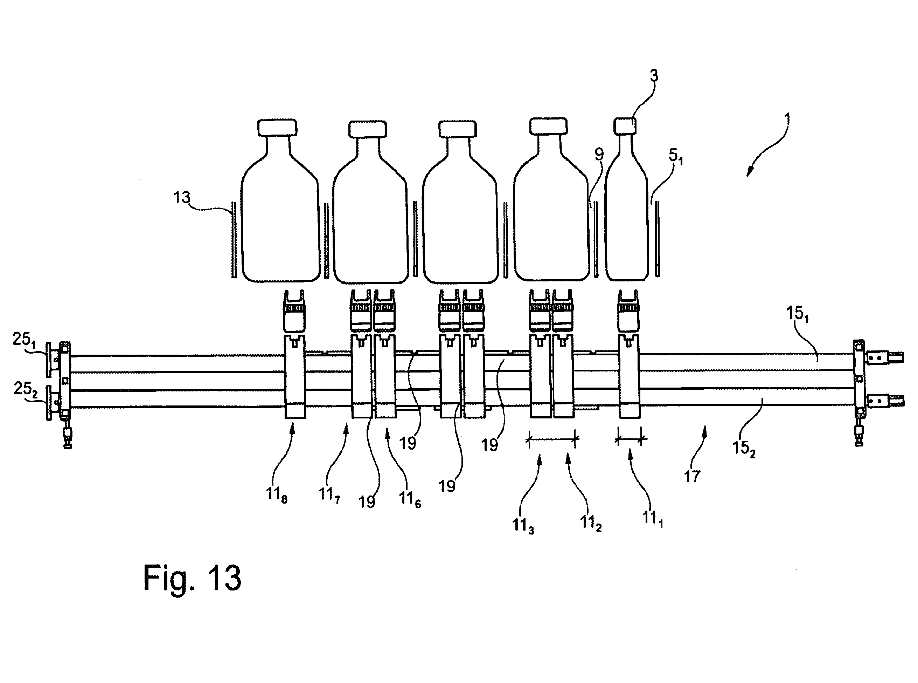

Jeweils die Einzelgasse 5ᵢ ist dem Trennelement 13ᵢ und dem Gassenträger 11ᵢ zugeordnet, i=1,...,8. Zum Einstellen der Breiten BE der Einzelgassen 5ᵢ und der Breiten BG der Gassengruppen 7ⱼ müssen nur die jeweiligen Trennelemente 13ᵢ bei der dargestellten Ausführungsform nach Figur 10 jeweils mit den jeweils zugeordneten Gassenträgern 11ᵢ der entsprechenden Welle 15₁ oder 15₂ passend verbunden sein (siehe Figuren 12 und 13).

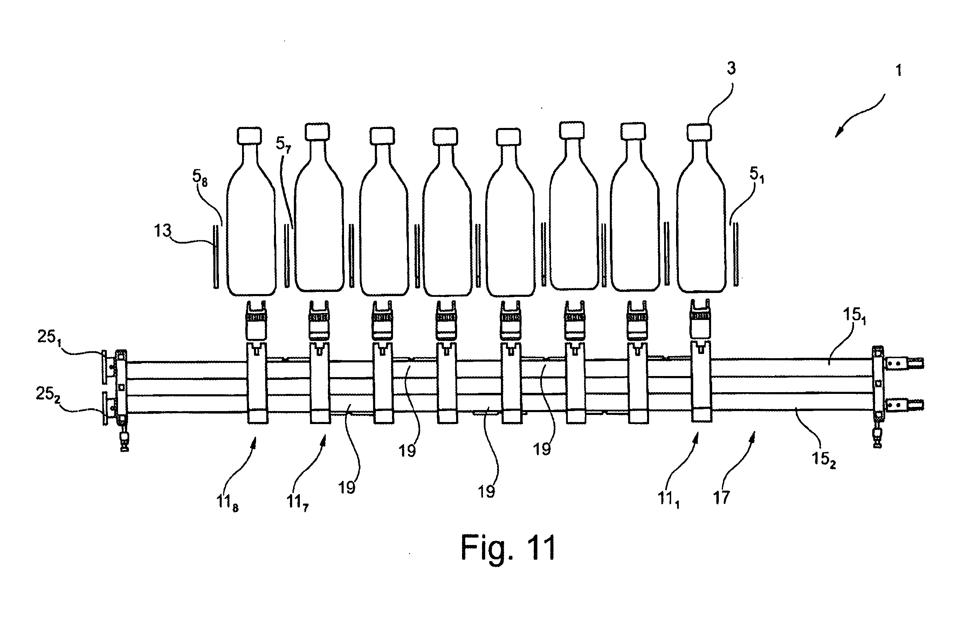

**Figur 11** zeigt eine Vorderansicht des Ausschnitts der Ausführungsform der Transportvorrichtung 1 in der Ausgangsposition nach Figur 10. Die Einzelgassen 5₁,...,5₈ sind mit einheitlich gleicher Breite BE dargestellt, passend zu den Artikeln 3 mit einheitlicher Form und Größe.

**Figur 12** zeigt eine Perspektivansicht des Ausschnitts der Ausführungsform der erfindungsgemäßen Transportvorrichtung 1 nach Figur 10 in einer Verstellung, so dass eine schmale Einzelgasse 5₁ für schmale Artikel 3s (siehe Figur 13) an einem Rand in der Transportrichtung TR der Transportrichtung 1 entsteht. Daran schließen sich Vereinigungsgassen 9 für den Transport breiterer Artikel 3b (siehe Figur 13) an. Die Vereinigungsgassen 9 sind jeweils aus einer Gassengruppe 7 aus jeweils zwei Einzelgassen 6 gemäß der oben bereits beschriebenen einfachen Ausführungsform gebildet.

**Figur 13** zeigt eine Vorderansicht des Ausschnitts der Ausführungsform mit der Einstellung nach Figur 12. Dazu wurden entsprechend die Spindeln 19 auf den beiden Wellen 15 eingestellt, wie oben bereits ausführlich beschrieben.

Die Erfindung wurde im Wesentlichen unter Bezugnahme auf eine bevorzugte einfache Ausführungsform beschrieben, die anschaulich ist. Ausführungsformen mit komplexeren Gruppierungen von Einzelgassen 5 wurden nur kurz beschrieben. Es ist jedoch für einen Fachmann vorstellbar, dass Abwandlungen oder Änderungen der Erfindung oder andere Gruppierungen von Einzelgassen 5 gemacht werden können, ohne dabei den Schutzbereich der nachstehenden Ansprüche zu verlassen.

## Patentansprüche

1. Transportvorrichtung (1) zum geordneten Transport von Artikeln (3), wobei die Transportvorrichtung (1) für die einzelnen Artikel (3) eine Vielzahl von Einzelgassen (5) jeweils mit einer Breite (BE) ausgebildet hat, die Artikel (3) auf den Einzelgassen (5) jeweils nacheinander geordnet geführt sind und jeder Einzeigasse (5) jeweils ein Trennelement (13) zugeordnet ist wobei benachbarte Einzelgassen (5) durch jeweils eines der Trennelemente (13) getrennt sind, wobei mindestens ein Verstellmittel (17) vorgesehen ist, mit dem die jeweiligen Breiten (BE) der Einzelgassen (5) quer zu einer Transportrichtung (TR) der Transportvorrichtung (1) einstellbar sind, **dadurch gekennzeichnet, dass** mindestens jeweils zwei benachbarte Einzelgassen (5) jeweils eine Gassengruppe (7) mit jeweils einer Breite (BG) bilden und dass mehrere der derart gebildeten Gassengruppen (7) zueinander verschiebbar sind, wobei mindestens ein weiteres Verstellmittel (17) vorgesehen ist, mit dem die jeweiligen Breiten (BG) der Gassengruppen (7) quer zur Transportrichtung (TR) einstellbar sind.

2. Transportvorrichtung (1) nach Anspruch 1, wobei die Breiten (BE) der Einzelgassen (5) und/oder die Breiten (BG) der Gassengruppen (7) mit den Verstellmitteln (17) stufenlos einstellbar sind.

3. Transportvorrichtung (1) nach einem der Ansprüche 1 bis 2, wobei die Verstellmittel (17) Wellen (15) mit jeweils einer Vielzahl von Spindeln (19) umfassen, wobei die Spindeln (19) auf den Wellen (15) derart angeordnet sind, dass sie zwischen den jeweiligen Gassengruppen (7) angeordnet sind.

4. Transportvorrichtung (1) nach Anspruch 3, wobei die Spindein (19) jeweils aus zwei gegenläufigen Abschnitten bestehen.

5. Transportvorrichtung (1) nach einem der Ansprüche 1 bis 4, wobei
mindestens zwei Einzelgassen (5) mindestens einer Gassengruppe (7) eine Vereinigungsgasse (9) mit einer Breite (BV) bilden, wobei die Breite (BV) größer als die summierten Breiten (BE) der mindestens zwei Einzelgassen (5) der mindestens einen Gassengruppe zu ist, wobei die zwischen den Einzelgassen (5) der jeweils derart gebildeten Vereinigungsgassen (9) befindlichen Trennelemente (13) entfernt sind.

6. Transportvorrichtung (1) nach einem der Ansprüche 1 bis 5, wobei jeweils zwei Einzelgassen (5) eine Gassengruppe (7) bilden, die Transportvorrichtung (1) eine erste Welle (15₁) und eine zweite Welle (15₂) umfasst, wobei die Verstellmittel (17) auf der ersten Welle (15₁) nach allen Einzelgassen (5) mit einer geradzahligen Ordnungszahl angeordnet und die Verstellmittel (17) auf der zweiten Welle (15₂) nach allen Einzelgassen (5) mit einer ungeradzahligen Ordnungszahl angeordnet sind.

7. Verfahren zum geordneten Transport von Artikeln (3) mit den Schritten:
• Ermitteln der Größen und Formen von auf einer Transportvorrichtung (1) einlaufenden Artikeln (3), wobei die einzelnen Artikel (3) in einer Vielzahl von Einzelgassen (5) mit jeweils einer Breite (BE) transportiert werden; und
• Einteilen der Einzelgassen (5) in Gassengruppen (7) aufgrund der ermittelten Formen und Größen der einlaufenden Artikel (3); **gekennzeichnet durch** die folgenden Schrittet
• Verstellen der Breiten (BE) der Einzelgassen (5) innerhalb jeder Gassengruppe (7) aufgrund der ermittelten Formen und Größen der einlaufenden Artikel (3).

8. Verfahren nach Anspruch 7, mit den folgenden Schritten:
• Einteilen der Einzelgassen (5) in Gassengruppen (7) von jeweils zwei Einzelgassen (5) durch Einstellen von Verstellmitteln (17) einer ersten Welle (15₁), wobei die Verstellmittel (17) auf der ersten Welle (15₁) nach allen Einzelgassen (5) mit einer geradzahligen Ordnungszahl angeordnet sind; und
• Verstellen der Breiten (BE) der Einzeigassen (5) innerhalb jeder Gassengruppe (7) durch Einstellen von Verstellmitteln (17) einer zweiten Welle (15₂), wobei die Verstellmittel (17) auf der zweiten Welle (15₂) nach allen Einzelgassen (5) mit einer ungeradzahligen Ordnungszahl angeordnet sind.

## Claims

1. A transport device (1) for the ordered transport of items (3), wherein the transport device (1) for the individual items (3) has developed a plurality of individual channels (5) in each case with a width (BE), the items (3) are conveyed on the individual channels (5) in each case one after the other in an ordered manner and in each case one separation element (13) is assigned to each individual channel (5), wherein adjacent individual channels (5) are separated by one of the separation elements (13) in each case, wherein at least one adjustment means (17) is provided, with which the respective widths (BE) of the individual channels (5) can be adjusted transversely to a transport direction (TR) of the transport device (1), **characterised in that** at least two adjacent individual channels (5) in each case form a channel group (7) with a width (BG) in each case and **in that** a plurality of the channel groups (7) formed in this manner can be displaced relatively to one another, wherein at least one further adjustment means (17) is provided, with which the respective widths (BG) of the channel groups (7) can be adjusted transversely to the transport direction (TR).

2. The transport device (1) according to Claim 1, wherein the widths (BE) of the individual channels (5) and/or the widths (BG) of the channel groups (7) can be adjusted steplessly with the adjustment means (17).

3. The transport device (1) according to any one of Claims 1 to 2, wherein the adjustment means (17) comprise shafts (15) with a plurality of spindles (19) in each case, wherein the spindles (19) are arranged on the shafts (15) in such a manner that they are arranged between the respective channel groups (7).

4. The transport device (1) according to Claim 3, wherein the spindles (19) in each case consist of two counter-rotating sections.

5. The transport device (1) according to any one of Claims 1 to 4, wherein at least two individual channels (5) of at least one channel group (7) form a unification channel (9) with a width (BV), wherein the width (BV) is larger than the summed widths (BE) of the at least two individual channels (5) of the at least one channel group (7), wherein the separation elements (13) located between the individual channels (5) of the unification channels (9) formed in this manner in each case are removed.

6. The transport device (1) according to any one of Claims 1 to 5, wherein in each case, two individual channels (5) form a channel group (7), the transport device (1) comprises a first shaft (15₁) and a second shaft (15₂), wherein the adjustment means (17) on the first shaft (15₁) are arranged downstream of all individual channels (5) with an even ordinal number and the adjustment means (17) on the second shaft (15₂) are arranged downstream of all individual channels (5) with an odd ordinal number.

7. A method for the ordered transport of items (3) with the steps:
- determining the sizes and shapes of items (3) running in on a transport device (1), wherein the individual items (3) are transported in a plurality of individual channels (5) with a width (BE) in each case; and
- dividing the individual channels (5) into channel groups (7) on the basis of the determined shapes and sizes of the items (3) running in;
**characterised by** the following steps:
- adjusting the widths (BE) of the individual channels (5) within each channel group (7) on the basis of the determined shapes and sizes of the items (3) running in.

8. The method according to Claim 7 with the following steps:
- dividing the individual channels (5) into channel groups (7) of two individual channels (5) in each case by adjusting adjustment means (17) of a first shaft (15₁), wherein the adjustment means (17) on the first shaft (15₁) are arranged downstream of all individual channels (5) with an even ordinal number; and
- adjusting the widths (BE) of the individual channels (5) within each channel group (7) by adjusting adjustment means (17) of a second shaft (15₂), wherein the adjustment means (17) on the second shaft (15₂) are arranged downstream of all individual channels (5) with an odd ordinal number.

## Revendications

1. Dispositif de transport (1) pour le transport ordonné d'articles (3), étant donné que le dispositif de transport (1) a formé pour les différents articles (3) une pluralité de canaux individuels (5) avec chacun une largeur (BE), les articles sont conduits l'un suivant l'autre sur les canaux individuels (5) et à chaque canal individuel (5) est affecté un élément de séparation (13), étant donné que les canaux individuels (5) adjacents sont chaque fois séparés par un des éléments de séparation (13), étant donné qu'est prévu au moins un moyen de réglage (17) avec lequel la largeur (BE) de chacun des canaux individuels (5) transversalement par rapport à un sens de transport (TR) du dispositif de transport (1) peut être ajustée, **caractérisé en ce que** chaque fois au moins deux canaux individuels adjacents (5) forment une groupe de canaux (7) avec chaque fois une largeur (BG) et **en ce que** plusieurs des groupes de canaux (7) ainsi formés peuvent être décalés l'un vers l'autre, étant donné qu'est prévu au moins un autre moyen de réglage (17) avec lequel chaque largeur (BG) des groupes de canaux (7) peut être ajustée transversalement par rapport au sens de transport (TR).

2. Dispositif de transport (1) selon la revendication 1, dans lequel les largeurs (BE) des canaux individuels (5) et/ou les largeurs (BG) des groupes de canaux (7) peuvent être ajustées en continu avec les moyens de réglage (17).

3. Dispositif de transport (1) selon l'une quelconque des revendications 1 à 2, dans lequel les moyens de réglage (17) comprennent des arbres (15) avec chacun une pluralité de broches (19), étant donné que les broches (19) sont disposées sur les arbres (15) de manière à ce qu'elles soient chaque fois disposées entre les différents groupes de canaux (7).

4. Dispositif de transport (1) selon la revendication 3, dans lequel les broches (19) se composent respectivement de deux segments en sens opposés.

5. Dispositif de transport (1) selon l'une quelconque des revendications 1 à 4, dans lequel au moins deux canaux individuels (5) d'au moins un groupe de canaux (7) forment un canal de réunion (9) avec une largeur (BV), étant donné que la largeur (BV) est supérieure à la somme des largeurs (BE) des au moins deux canaux individuels (5) du au moins un groupe de canaux (7), étant donné que les éléments de séparation (13) se trouvant entre les canaux individuels (5) des canaux de réunion (9) sont enlevés.

6. Dispositif de transport (1) selon l'une quelconque des revendications 1 à 5, dans lequel chaque fois deux canaux individuels (5) forment un groupe de canaux (7), le dispositif de transport (1) comprend un premier arbre (15₁) et un deuxième arbre (15₂), étant donné que les moyens de réglage (17) se trouvant sur le premier arbre (15₁) sont disposés vers tous les canaux individuels (5) avec un nombre ordinal pair et les moyens de réglage (17) se trouvant sur le deuxième arbre (15₂) sont disposés vers tous les canaux individuels (5) avec un nombre ordinal impair.

7. Procédé pour le transport ordonné d'articles (3) avec les étapes suivantes :
- détermination des tailles et formes d'articles (3) arrivant sur un dispositif de transport (1), étant donné que les différents articles (3) sont transportés dans une pluralité de canaux individuels (5) avec chacun une largeur (BE) ; et
- répartition des canaux individuels (5) en groupes de canaux (7) sur la base des formes et tailles déterminées des articles (3) qui arrivent ;
**caractérisée par** les étapes suivantes :
- ajustage des largeurs (BE) des canaux individuels (5) au sein de chaque groupe de canaux (7) sur la base des formes et tailles déterminées des articles (3) qui arrivent.

8. Procédé selon la revendication 7 avec les étapes suivantes :
- répartition des canaux individuels (5) en groupes de canaux (7) de deux canaux individuels (5) chacun par l'ajustage de moyens de réglage (17) d'un premier arbre (15₁), étant donné que les moyens de réglage (17) se trouvant sur le premier arbre (15₁) sont disposés vers tous les canaux individuels (5) avec un nombre ordinal pair ; et
- ajustage des largeurs (BE) des canaux individuels (5) au sein de chaque groupe de canaux (7) par l'ajustage de moyens de réglage (17) d'un deuxième arbre (15₂), étant donné que les moyens de réglage (17) se trouvant sur le deuxième arbre (15₂) sont disposés vers tous les canaux individuels (5) avec un nombre ordinal impair.
